# EUROPEAN PATENT SPECIFICATION

(11) **EP 1 479 301 B1**
(45) Date of publication and mention of the grant of the patent: **08.10.2008**
(21) Application number: 04011846.5
(22) Date of filing: 19.05.2004
(51) Int. Cl.: A23L 1/328, A22C 25/00, A23B 4/00

(54) **Closed system for curing fish eggs**
Vorrichtung zur Konservierung von Rogen
Dispositif pour la maturation des oeufs de poisson

(30) Priority: 22.05.2003 NO 20032320
(43) Date of publication of application: 24.11.2004
(73) Proprietor: Mills DA, 0558 Oslo (NO)
(72) Inventor: Eide, Ola, 1356 Bekkestua (NO); Storro, Ivar, 7033 Trondheim (NO); Sveen, Per, 7048 Trondheim (NO)
(74) Representative: Onn, Thorsten

(56) References cited:
- WO-A-99/20118
- WO-A-99/60863
- US-A1- 2002 049 035
- PATENT ABSTRACTS OF JAPAN vol. 1997, no. 09, 30 September 1997 (1997-09-30) -& JP 09 135658 A (OGATA TSUYOSHI; NIPPON FILLESTER CO LTD), 27 May 1997 (1997-05-27)
- DATABASE WPI Section Ch, Week 199744 Derwent Publications Ltd., London, GB; Class D12, AN 1997-478196 XP002293946 -& RU 2 075 937 C1 (VASILENKO N V), 27 March 1997 (1997-03-27)
- DATABASE WPI Section Ch, Week 198407 Derwent Publications Ltd., London, GB; Class D12, AN 1984-041118 XP002293947 -& SU 1 009 387 A (DALTEKHRYBPROM), 7 April 1983 (1983-04-07)
- PATENT ABSTRACTS OF JAPAN vol. 2002, no. 07, 3 July 2002 (2002-07-03) -& JP 2002 065219 A (TAIYOO SEISAKUSHO:KK; KOBAYASHI KIYOHIRO), 5 March 2002 (2002-03-05)
- DATABASE WPI Section Ch, Week 199851 Derwent Publications Ltd., London, GB; Class D12, AN 1998-607845 XP002293948 -& RU 2 110 179 C1 (SOVA V V), 10 May 1998 (1998-05-10)

## Description

The present invention relates to the curing of fish eggs, and more specifically it relates to a closed system for the continuous or batchwise separation and curing or preservation of fish eggs.

The invention is particularly useful in the treatment of codfish roe for the purpose of producing Scandinavian caviar, which is a caviar emulsion based on fish eggs and vegetable oils. The invention may also be used for the processing of fish eggs from many different species of fish, both seawater and freshwater.

Today, to prepare raw material for caviar production, the roe is sugar-salted in the form of whole roe sacs. The roe sacs are placed manually in layers with sugar and salt in wooden or plastic barrels. Filled barrels are stored cold in cold-storage rooms.

One of the requirements of today's production is that the roe sacs used in the sugar salting should be whole.

Through the process of this dry salting, water is drawn out of the roe sacs and if the sacs are damaged by, for example, cuts in the membrane surrounding the sac, this will lead to fish eggs from damaged sacs accompanying the liquid and ending up in the brine surrounding the roe sacs. The brine from this salting process is not used later in the production process, and this means that damaged roe sacs lead to a loss of valuable raw material when the barrels are emptied and the whole, treated roe sacs are removed from the brine.

After the salting barrels have been filled with fresh roe sacs and salt/sugar for the first time, they are left for one or two days to allow the sacs to settle, and the barrels are topped up with roe sacs to avoid air in the barrels, which could cause a proliferation of micro-organisms such as bacteria, fungus and yeast and also the possibility of the roe turning rancid.

Naturally, a proliferation of micro-organisms and a rancidity will mean that the roe becomes useless as raw material.

After the salting process there follows a period of about 3-4 weeks during which the salt and sugar dissolve in the liquid that is drawn out of the roe sacs. If the barrels are left to stand still in this period, the undissolved salt and sugar will sink to the bottom resulting in concentration gradients in the barrel with a low salt concentration at the top. This in turn will result in the roe in this area perishing, thus becoming unsuitable as raw material for caviar production.

Today, this problem is solved by rolling and turning the barrels manually at regular intervals, several times a week in the first month. As these barrels weigh 120-135 kg, this is heavy, strenuous work.

Since the barrels cannot easily be stacked in the cold store because of the need to roll and turn them and also because of their weight, they must stand on the floor, which in turn means that they take up an unduly large amount of space in the cold store.

Other problems associated with this processing of roe sacs in barrels include transport. There is only room for four barrels on a standard pallet and the pallets must be handled with great care to prevent the barrels from falling off and being damaged. The necessary, careful handling during transport and the consequent handling in relatively small units will also have its effect on the transport costs per kilogram product. In addition, there are factors such as the round shape of the barrels which makes maximum space utilisation difficult, both during transport and later during the storage phase.

When the barrels containing roe sacs arrive at the factory, each one is opened and barrels with too low a level of brine are topped up. This problem is encountered in particular with wooden barrels. Wooden barrels are not 100% watertight and will "sweat" brine. Therefore, wooden barrels must be constantly topped up. This is done by drilling holes in the barrel, topping up with brine and sealing the holes again with a wooden bung.

After this preliminary treatment, the barrels are kept at a cold store temperature for as long as 20 months prior to production whilst waiting for the roe to mature. It is therefore absolutely necessary that the roe sacs are adequately preserved. In particular with large roe sacs, the penetration of salt takes a long time, which in turns provides another opportunity for micro-organisms to proliferate and the raw material, i.e., the roe, to perish as a result. During the maturing process too, wooden barrels must be topped up because of leakage of brine.

Before the final production, the barrels are emptied manually and the roe sacs are carefully removed from the brine. The roe sacs are placed manually on racks to drain before the sac membrane surrounding the roe sac mass, which consists of individual roe granules, is removed mechanically and a mass consisting of fish eggs is obtained.

The individual fish eggs are thus released and it is these eggs that are used in the production of caviar emulsion.

The manual handling when placing the roe sacs in the barrels, the necessary opening of the barrels for topping up with brine and the manual emptying of the barrels after storage represent possible times for the infiltration of unwanted micro-organisms.

The infiltration of unwanted micro-organisms can result in the raw material being unsuitable for further processing.

Thus, the sugar-salting is an extremely time-demanding process which is still based on experience from the past and good, old-fashioned craftsmanship.

However, the absence of a process and chemical-technical way of thinking has resulted in the process as such remaining unchanged for almost 100 years.

A development in this area is found in the present Applicant's Norwegian patents, NO 305823 B, which is directed towards a method for producing caviar, and NO 311163 B, which is directed towards a method for preserving roe.

Both these patents are based on a technology in which fish eggs are efficiently separated from the roe sac membrane. JP 09135658 discloses an apparatus for treating the ovary of a fish body by taking out the roe from the ovary. The roe and the roe sacks are treated by adding a salt water brine which water at a later stage is dehydrated. RU 2075937 discloses an apparatus for treating the ovary of a fish body by cooling the ovaries to -5°C and crushing them. Thereafter a salt water brine is added which at a later stage is separated from the roe. From SU 1009387 an apparatus for separating roe grains from roe membranes. Here nothing is mentioned about further treatment of the roe. The object of the present invention is to provide an apparatus which permits a continuous or batchwise processing of the raw material fed into the apparatus, whether whole or damaged roe sacs and individual fish eggs, and which in a closed apparatus produces a slurry of individual fish eggs.

Accordingly, the present invention, in its broadest aspect, relates to a closed system for the continuous or batchwise curing or preservation of fish eggs. The system is closed and can be cleaned using cleaning techniques that are well known in the food industry. The system can easily be constructed using well known technology, so that it can be steamed, chemically sanitised or sterilised to prevent microbial contamination of the roe mass. This system is characterised in that it comprises the following means arranged sequentially:
1. means for drawing in whole or damaged roe sacs and partially separated fish egg mass;
2. means for cutting up roe sacs of the mass and separating roe from membranes and veins;
3. means for continuously or batchwise mixing the roe with preservatives; and
4. means for the transport, storing and maturing of the processed fish egg mass.

The invention will be illustrated in more detail by means of the attached figures, wherein:
Fig. 1 is a general flow chart of one embodiment of the apparatus according to the invention;
Fig. 2 shows a device for use in the separator to separate individual fish eggs from membranes and the like; and
Fig. 3 is a sectional view of the device according to Fig. 2 taken along the line A-A.

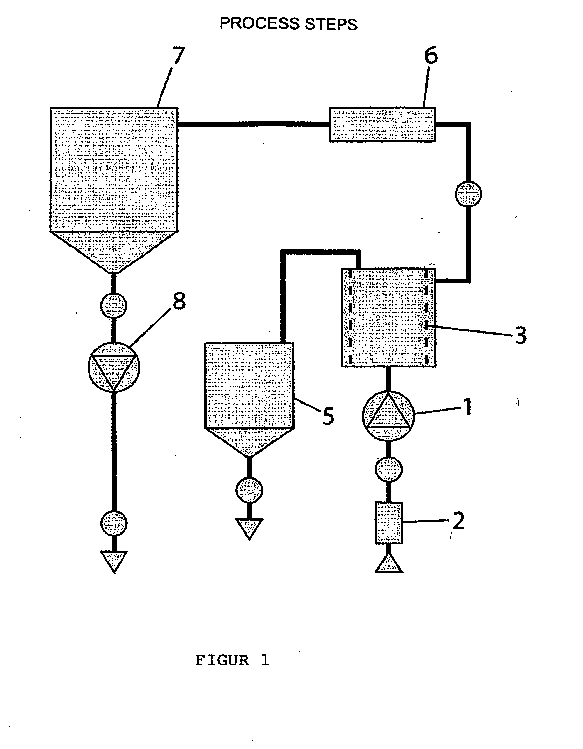

Referring to Fig. 1, roe in the form of whole roe sacs, damaged roe sacs and individual granules are drawn into the apparatus via the pump 1. Installed in the pump inlet pipe is a knife 2 which automatically slits open the roe sac membranes.

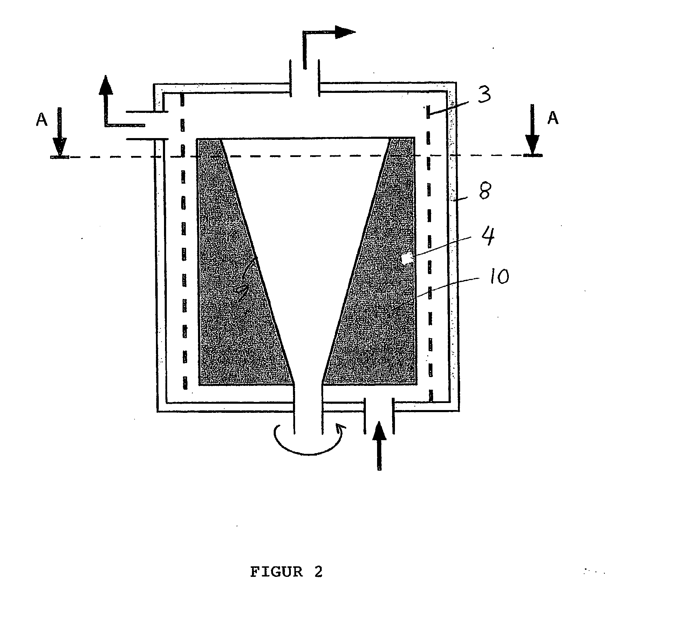

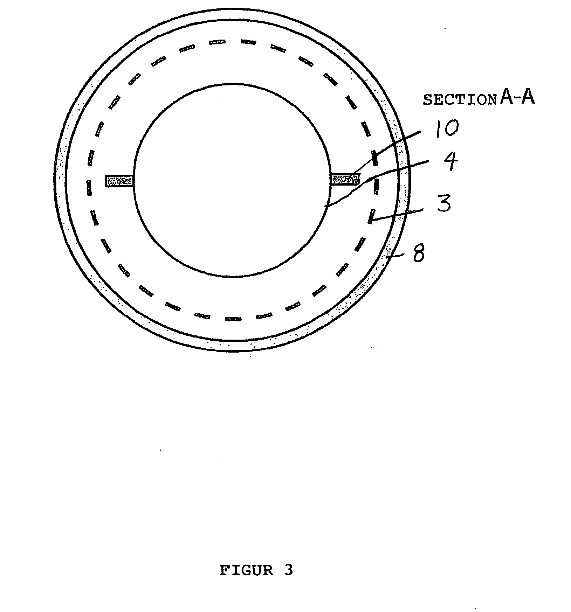

The slit roe sac is passed into a perforated cylinder 3 (Figs. 2 and 3) having a hole diameter of from 0.5 to 5 mm and preferably from 1 to 3 mm.

With the aid of a reciprocatingly rotating scraping device, the purpose of which is to remove roe membrane from the surface 4 of the sieve, illustrated in more detail in Figs. 2 and 3, the fish eggs are worked through the perforations in the perforated cylinder whilst the roe membranes are transferred to a separate storage tank 5.

The fish eggs are then passed to a filter device consisting of one or more filters 6, which filters may be constructed of a woven wire mesh of steel where any remains of membranes and veins are separated from the fish eggs. The cleaned eggs are then passed to a mixing tank 7 where they are continuously or batchwise mixed with preservative, salt, sugar, food-approved preservatives, acidity regulators and other desirable or necessary additives, such as colouring agents and flavour enhancing or flavouring additives.

As mentioned, this mixing may take place both continuously and batchwise.
In the continuous process the preservatives and/or additives are added continuously in the correct concentration to the cleaned fish egg mass, and the mixing is carried out using static mixers or by mechanical mixing.

When preservatives are added in a batch process, the mixing tank 7 is filled with the desired amount of fish eggs. Based on this amount of fish eggs, the preserving and/or curing and/or flavouring components are added to the fish eggs.

This adding of components may be done by the direct addition of pre-weighed components, either individually or in combination. However, the adding of components may also be done by the automatic addition of the desired and necessary components.

All the ingredients are then mixed until they become a homogeneous mass using mechanical mixing equipment.

Once a homogeneous mixture has been obtained, the preserved roe slurry is pumped by a pump 8 to non-illustrated, suitable storage, transport and maturing vessels, which may be one and the same vessel.

Figs. 2 and 3 shows a possible separating apparatus.

This apparatus comprises an outer housing 8, in which is provided a cylindrical mesh 3 and arranged in the centre thereof is a reciprocatingly working rubber spatula 4. This consists of a conical or tapering core 9 with its tip in the opposite direction to the flow direction of the roe mass, and equipped preferably with two wings 10, the edges of which in the flow direction of the roe mass extend substantially parallel to the mesh cylinder. By means of the reciprocating movement, the fish eggs are pressed out through the mesh cylinder 3 whilst remaining membranes, veins and the like with some accompanying roe mass are optionally routed to be passed again through the separator or are recycled to incoming roe mass.

Very many advantages are obtained with this new, closed apparatus.

As mentioned above, the conventional method involved a great deal of heavy manual labour in connection with the salting. This work has now been made unnecessary. Furthermore, the chances of microbial contamination are minimised.

As pointed out, it is not necessary that the roe sacs should be whole, as required hitherto, and this means that the proportion of damaged roe, which may be as much as 10 to 25% of available roe, can also be used in the caviar production.

Because the processing apparatus is closed, it will be more protected against microbial contamination and the admixture of air which may result in the roe mass turning rancid.

A very important feature is that preservation is faster in the process that utilises the inventive apparatus. Salting of whole roe sacs is problematic because large sacs have a tendency to perish. As mentioned, this is due to the fact that it takes too long for the salt to penetrate through the whole roe sac and provide a preservative salt concentration.

When the fish eggs are salted individually as happens in the inventive apparatus, the salt penetration is reckoned to be about 2000-10000 times faster than when whole roe sacs are salted. This means that the preserving process in which the inventive apparatus is utilised is over in a few minutes.

The use of the inventive apparatus results in an immediate homogeneous slurry and the mixing that was previously necessary in the form of barrel rolling and turning is no longer required, which in turn means that both the heavy, manual labour and the substantial need for floor space are no longer necessary.

During the roe processing as still carried out today, the barrels are emptied by hand, each individual roe sac being taken out and prepared for further processing.

By using the inventive apparatus, the fish eggs are converted into a pumpable mass which can easily be moved by mechanical pumping.

As the ready preserved roe mass is also pumpable, it can easily be moved to desired storage vessels such as barrels, bag-in-boxes, tanks or other vessels of desired or required size and shape.

This also means that transport between fish receiving facilities and factory may take place in a simpler and more rational manner.

After the preserved roe has been put into a desired storage vessel, there is no longer any need for manual follow-up work before the roe slurry obtained is to be used in the production process.

It is not necessary to open the vessels when they arrive at the factory, and there is also no need for topping up with brine.

The final emptying of the vessels can also be done using pumps, and this means that virtually the whole caviar production process can now be carried out in a closed process.

It has also be found that by using an apparatus as shown in Figs. 2 and 3, the amount of crushed fish eggs is negligible, which means a further saving.

## Claims

1. A closed system for the continuous or batchwise curing or preservation of fish eggs, **characterised in that** it comprises the following means arranged sequentially:
means (1) for drawing in the fish egg mass;
means for cutting (2) roe sacs of the mass and separating (3) roe from membranes and veins;
means (7) for continuously or batchwise mixing the roe with preservatives; and
means for the transport, storage and maturing of the processed roe mass.

2. A system according to claim 1, **characterized in that** the separation of fish eggs from membranes, veins and the like takes place in a chamber equipped with a circular mesh cylinder (3) in which there is provided a reciprocatingly rotating cone (9) with spatulas (10).

## Patentansprüche

1. Geschlossenes System zur kontinuierlichen oder chargenweisen Nachbehandlung oder Konservierung von Fischeiern, **dadurch gekennzeichnet, dass** es die folgenden, nacheinander angeordneten Mittel umfasst:
Mittel (1) zum Einsaugen der Fischeiermasse;
Mittel zum Abschneiden (2) von Rogenbeuteln von der Masse und zum Trennen (3) von Rogen von Membranen und Adern;
Mittel (7) zum kontinuierlichen oder chargenweisen Mischen des Rogens mit Konservierungsmitteln; und
Mittel für den Transport, die Lagerung und die Reifung der verarbeiteten Rogenmasse.

2. System nach Anspruch 1, **dadurch gekennzeichnet, dass** die Trennung von Fischeiern von Membranen, Adern und dergleichen in einer Kammer mit einem kreisförmigen Maschenzylinder (3) erfolgt, in dem ein hin- und herdrehender Kegel (9) mit Spateln (10) angeordnet ist.

## Revendications

1. Système fermé pour le traitement ou la conservation en continu ou en discontinu d'oeufs de poisson, **caractérisé en ce qu'**il comprend les moyens suivants, agencés séquentiellement:
moyens (1) pour aspirer la masse des oeufs de poisson;
moyens pour couper (2) des sacs ovariens de la masse et séparer (3) la rogue de membranes et veines;
moyens (7) pour mélanger en continu ou en discontinu la rogue avec des agents de conservation; et
moyens pour le transport, le stockage et la maturation de la masse de rogue traitée.

2. Système selon la revendication 1, **caractérisé en ce que** la séparation d'oeufs de poisson de membranes, veines etc. a lieu dans une chambre équipée d'un cylindre à mailles (3) circulaire dans lequel est agencé un cône (9) à mouvement rotatif alternatif muni de spatules (10).
